# FASCICULE DE BREVET EUROPEEN

(11) **EP 1 288 030 B1**
(45) Date de publication et mention de la délivrance du brevet: **21.05.2008**
(21) Numéro de dépôt: 02017461.1
(22) Date de dépôt: 05.08.2002
(51) Int. Cl.: B60H 1/00

(54) **Dispositif de mixage d'un flux d'air utilisé notamment dans un appareil de chauffage et/ou de climatisation de véhicule automobile**
Luftstrommischanlage insbesondere für Kraftfahrzeug- Heizungs- und/oder Klimaanlagen
Air flow mixing device especially used in an air-conditioning and/or heating apparatus for automotive vehicles

(30) Priorité: 30.08.2001 FR 0111271
(43) Date de publication de la demande: 05.03.2003
(73) Titulaire: VALEO SYSTEMES THERMIQUES, 78320 Le Mesnil Saint-Denis (FR)
(72) Inventeur: Vincent, Philippe, 28230 Epernon (FR)
(74) Mandataire: Léveillé, Christophe

(56) Documents cités:
- EP-A- 0 958 951
- US-A- 5 881 558
- US-A- 5 950 711

## Description

L'invention concerne les dispositifs de chauffage et/ou de climatisation de l'habitacle d'un véhicule automobile.

Plus précisément, elle concerne un dispositif de mixage pour répartir en proportions variables un flux d'air principal, notamment un flux d'air circulant dans un appareil de chauffage et/ou de climatisation de l'habitacle d'un véhicule automobile, entre au moins un conduit d'air chaud et au moins un conduit d'air froid.

Elle concerne également un appareil de chauffage et/ou de climatisation, notamment de l'habitacle d'un véhicule automobile, comprenant un boîtier délimitant un passage dans lequel circule un flux d'air, ce passage se divisant en au moins un conduit d'air chaud et en au moins un conduit d'air froid.

Les appareils de chauffage de l'habitacle d'un véhicule automobile comprennent généralement un boîtier logeant un pulseur pour pulser un flux d'air dans le boîtier et le répartir ensuite dans l'habitacle. Un radiateur de chauffage, monté en dérivation dans un conduit d'air de chauffage, permet de chauffer l'air avant de l'introduire dans l'habitacle lorsque la température extérieure est basse, par exemple en hiver.

Afin de permettre à l'utilisateur de régler à sa convenance la température de l'air, l'appareil de ventilation et de chauffage est équipé d'un dispositif de mixage de l'air qui permet de répartir le flux d'air en proportions variables entre le conduit d'air chaud et le conduit d'air froid. Le dispositif de mixage permet également de faire fonctionner l'appareil de ventilation et de chauffage dans un mode "chaud" dans lequel le conduit d'air froid est entièrement obturé afin que la totalité de l'air traverse le radiateur de chauffage, et dans un mode "froid" dans lequel le conduit d'air chaud est entièrement obturé afin que la totalité de l'air évite le radiateur de chauffage. Les dispositifs de mixage, pour fonctionner de manière satisfaisante, doivent répondre à un certain nombre d'exigences.

Tout d'abord, le dispositif doit garantir une parfaite étanchéité des conduits d'air chaud et d'air froid. En mode froid, il s'agit d'éviter une aspiration d'air chaud qui aurait pour effet de réchauffer l'air introduit dans l'habitacle du véhicule. En mode chaud, il s'agit d'éviter toute aspiration d'air froid afin d'utiliser au mieux les capacités de chauffage du radiateur.

Le dispositif doit permettre la flexibilité de la mise au point aérothermique de l'appareil de chauffage. En effet, cet appareil comporte plusieurs sorties, notamment une sortie de dégivrage, une sortie au niveau de la planche de bord et une sortie au niveau des pieds du conducteur et du passager avant. Il comporte également, dans les véhicules les mieux équipés, une sortie au niveau des places arrière. Le dispositif de mixage doit permettre de canaliser et de diriger le flux d'air vers des endroits préférentiels afin d'assurer une bonne répartition selon les différentes sorties. Il doit également permettre d'ajuster avec précision la quantité relative d'air chaud et d'air froid et permettre un bon mélange des flux d'air chaud et froid.

Par ailleurs, l'appareil doit être aussi compact que possible afin de réduire son encombrement. C'est pourquoi on a proposé (EP 0 958 951) des dispositifs de mixage utilisant une plaque obturatrice disposée sensiblement perpendiculairement au flux d'air et coulissant dans des glissières du boîtier. Bien qu'il présente l'avantage d'être compact, ce dispositif comporte de nombreux inconvénients.

L'étanchéité est assurée par un joint. L'écrasement de ce joint génère un effort de frottement important lors du coulissement de la plaque dans la glissière. Cet effort de frottement impose un effort de commande très important.

L'utilisation d'un élément d'obturation unique ne permet pas d'ajuster la quantité d'air chaud et d'air froid pour satisfaire aux conditions de température requises pour les positions intermédiaires de la commande. En outre, étant donné que la plaque obturatrice est d'un seul tenant, les zones du radiateur qui sont situées derrière elle ne sont pas traversées par le flux d'air. Cette disposition n'est pas favorable au bon mélange de l'air et à la mise au point aérothermique de l'appareil de chauffage.

La nécessité d'assurer l'étanchéité du dispositif impose d'utiliser des tolérances réduites pour les composants et les ajustements. Ces tolérances sont difficiles à obtenir avec les procédés et les matériaux généralement utilisés pour la réalisation des appareils de chauffage et de climatisation. Le coût de fabrication est donc augmenté.

Dans le but de remédier à ces inconvénients, le document US 5950711, qui est considéré comme l'état de la technique le plus proche, divulgue un dispositif de mixage comprenant au moins un panneau comportant un ajour disposé dans le conduit d'air chaud, et une plaque obturatrice mobile entre une position d'ouverture dans laquelle elle ne recouvre pas l'ajour du panneau et une position d'obturation dans laquelle elle obture l'ajour du panneau ; au moins un volet de réglage de la section de passage du conduit d'air froid mobile entre une position d'ouverture et une position d'obturation, et un mécanisme de commande pour commander de manière synchronisée le déplacement de la plaque obturatrice et le déplacement du volet de réglage de la section de passage du conduit d'air froid entre leur position d'ouverture et leur position d'obturation. Cette disposition présente cependant toujours l'inconvénient de ne pas être favorable au passage de l'air, puisque certaines zones du radiateur sont difficilement accessibles par le flux d'air, même quand le volet est ouvert. La présente invention a pour objet un dispositif de mixage qui résout ces inconvénients. Ces objectifs sont atteints conformément à l'invention, par le fait que plaque obturatrice se déplace suivant un mouvement combiné de translation et de rotation.

Ces déplacements sont synchronisés de telle manière que la section de passage du conduit d'air chaud augmente lorsque la section de passage du conduit d'air froid diminue et inversement. Par ailleurs, le conduit d'air chaud est complètement ouvert lorsque le conduit d'air froid est complètement fermé, et inversement.

Ainsi, le dispositif comporte deux éléments de réglage indépendants, l'un pour le conduit d'air chaud, l'autre pour le conduit d'air froid. La définition de ces éléments et leur logique de déplacement permettent de remplir de manière optimale toutes les caractéristiques de la fonction de mixage d'air. Il garantit une flexibilité d'ajustement de la quantité et de la localisation du flux d'air à injecter dans le conduit d'air chaud et dans le conduit d'air froid. Il permet de réaliser des circuits d'air chaud et d'air froid très perméables, c'est-à-dire des circuits dans lesquels la perte de charge est faible. Le flux d'air en provenance du pulseur, ou de l'évaporateur si l'appareil de chauffage en comporte un, transite directement dans le radiateur sans subir de changement de direction important.

Ce dispositif garantit une parfaite étanchéité du circuit d'air froid. Ce dernier est en effet obturé par un volet de fermeture spécifique, ajustable indépendamment de celui du circuit d'air chaud. Le déplacement de ce volet est, de préférence, un mouvement de rotation qui génère en fin de course un effort de fermeture dans la direction des portées de volet.

De préférence, le panneau comporte une pluralité d'ajours et la plaque obturatrice une pluralité de découpes, les ajours du panneau et les découpes de la plaque obturatrice étant disposés les uns par rapport aux autres de telle manière que le conduit d'air chaud est obturé quand la plaque obturatrice est dans sa position d'obturation.

Grâce à cette caractéristique préférentielle, l'air admis dans le conduit d'air chaud est réparti sur toute la surface frontale du radiateur alors que, dans l'art antérieur mentionné précédemment, il existe des zones du radiateur qui ne sont pas atteintes par le flux d'air.

Par ailleurs, le nombre, l'emplacement, le sens, la forme, les dimensions des ajours du panneau et des découpes de la plaque obturatrice constituent des paramètres sur lesquels on peut jouer pour assurer la mise au point aérothermique de l'appareil. En outre, cette disposition permet un mouvement de débattement de la plaque obturatrice de faible amplitude, inférieure à la demi-hauteur du radiateur. Ce mouvement de débattement de faible amplitude permet de faciliter l'intégration du dispositif de mixage dans les appareils de faible volume. Il permet également de respecter une distance importante entre le bas de la plaque obturatrice et le fond du boîtier. Cette disposition a l'avantage de générer un volume important utilisable pour créer un bac de récupération des condensats de l'évaporateur, pour faciliter l'écoulement de ces condensats vers un orifice d'évacuation et éviter de mettre le système d'étanchéité de la plaque obturatrice en contact avec les condensats. On s'affranchit ainsi des problèmes d'odeur pouvant résulter de la présence de ces condensats. On dispose d'une possibilité de passage d'air permettant d'alimenter favorablement les circuits d'air chaud et d'air froid.

Grâce au déplacement de la plaque obturatrice selon un mouvement combiné de translation et de rotation,

l'étanchéité de la plaque obturatrice du circuit du conduit d'air chaud se fait par un appui sur une portée. Cet appui est généré par le mouvement de rotation de l'organe de commande qui, en fin de course, transmet un effort de fermeture sensiblement dans la direction de l'appui à réaliser. Ce mode de fonctionnement s'oppose à celui du dispositif décrit précédemment qui utilise un mouvement de glissement générant un effort sensiblement parallèle à l'appui et donc non adapté pour garantir une bonne étanchéité.

En outre, l'effort à mettre en oeuvre pour garantir une parfaite étanchéité de la plaque obturatrice ne s'applique qu'en fin de course. Il n'affecte donc pas le mouvement des éléments qui peuvent se déplacer librement sans effort important durant la plus grande partie de leur déplacement.

En outre, la pression d'air contribue à plaquer la plaque obturatrice sur sa portée et favorise l'étanchéité.

La position du centre et la valeur du rayon, l'angle au centre du secteur d'entraînement de la plaque obturatrice constituent des paramètres qui augmentent encore la flexibilité de mise au point aérothermique du dispositif de mixage. Par exemple, une position différente du secteur d'entraînement par rapport à la plaque obturatrice peut, pour une position donnée de la commande de température, augmenter ou réduire la quantité d'air injectée dans la partie basse du radiateur.

L'éloignement des faces latérales du panneau par rapport aux bords latéraux de la plaque obturatrice peut permettre une admission d'air complémentaire à celle qui traverse les ouvertures de la plaque obturatrice. Ce flux d'air additionnel peut contribuer à répartir l'air de manière encore plus homogène sur toute la surface frontale du radiateur. Cette disposition garantit un coefficient d'adaptation thermique optimal.

Du fait que le dispositif de mixage utilise principalement des transmissions à mouvement rotatif, les contacts et les frottements entre les pièces sont limités. Cela permet de limiter les efforts de commande, les bruits de déplacement et la vibration des pièces, ainsi que leur usure. La fiabilité du système est garantie par la possibilité de respecter, pour la fabrication des composants, de faibles tolérances d'ajustement et de déplacement.

Des caractéristiques complémentaires ou optionnelles de l'invention sont énoncées ci-après.
- Le radiateur de chauffage est sensiblement vertical ; et alors :
   - le dispositif comporte un conduit d'air froid unique situé au-dessous du conduit d'air chaud ;
   - le dispositif comporte un conduit d'air froid unique situé au-dessus du conduit d'air chaud ;
   - le dispositif comporte un conduit d'air froid situé au-dessous du conduit d'air chaud et un conduit d'air froid situé au-dessus du conduit d'air chaud ;
   - le dispositif comporte un conduit d'air froid unique situé latéralement par rapport au conduit d'air chaud ;
   - le dispositif comporte deux conduits d'air froid situés latéralement de part et d'autre du conduit d'air chaud ;
- le radiateur de chauffage est sensiblement horizontal ; et dans ce cas :
   - le dispositif comporte un conduit d'air froid unique situé à l'avant du conduit d'air chaud ;
   - le dispositif comporte un conduit d'air froid unique situé à l'arrière du conduit d'air chaud ;
   - le dispositif comporte un conduit d'air froid situé à l'avant du conduit d'air chaud et un conduit d'air froid situé à l'arrière du conduit d'air chaud ;
   - le dispositif comporte un conduit d'air froid unique situé latéralement par rapport au conduit d'air chaud ;
   - le dispositif comporte deux conduits d'air froid situés latéralement de part et d'autre du conduit d'air chaud ;
   - le mécanisme de commande comprend un levier de commande qui commande le déplacement de la plaque obturatrice et le déplacement du volet de réglage de la section de passage du conduit d'air froid ;
   - le levier de commande commande le déplacement de la plaque obturatrice et/ou le déplacement du volet de réglage de la section de passage du conduit d'air froid par l'intermédiaire d'une bielle ;
   - le levier de commande commande le déplacement de la plaque obturatrice et/ou le déplacement du volet de réglage de la section de passage du conduit d'air froid par l'intermédiaire d'un secteur denté ;
   - la plaque obturatrice et/ou le volet de réglage de la section de passage du conduit d'air froid sont munis d'un dispositif d'équilibrage ;
   - le dispositif d'équilibrage est constitué par un ressort, par une masselotte ou par des écopes ;
   - la plaque obturatrice et/ou le volet de réglage de la section de passage du conduit d'air froid comprennent des moyens déflecteurs d'air, tels que des pontets ou des nervures, pour diriger le flux d'air chaud et/ou le flux d'air froid vers des zones choisies d'un dispositif de chauffage et/ou de climatisation de l'habitacle d'un véhicule automobile ;
   - la plaque obturatrice et/ou le panneau comportent des moyens d'étanchéité pour assurer l'étanchéité du conduit d'air chaud en position d'obturation de la plaque obturatrice ;
   - les moyens d'étanchéité sont constitués par des lèvres souples surmoulées sur le panneau et/ou sur la plaque obturatrice ;
   - les moyens d'étanchéité sont constitués par un joint en mousse prévu sur le panneau et/ou sur la plaque obturatrice ;
   - la plaque obturatrice et/ou le panneau comprennent des moyens pour atténuer le niveau de bruit engendré par leur fonctionnement ;
   - les moyens pour atténuer le niveau de bruit sont constitués par un profilage du panneau et/ou de la plaque obturatrice ;
   - les moyens pour atténuer le niveau de bruit sont constitués par des inserts en matière allégée ;
   - les moyens pour atténuer le niveau de bruit sont constitués par des inserts revêtus d'un matériau isolant ;
   - les moyens pour atténuer le niveau de bruit sont constitués par une grille prévue dans les découpes de la plaque obturatrice.

Par ailleurs, l'invention concerne un appareil de chauffage et/ou de climatisation, notamment de l'habitacle d'un véhicule automobile, qui comprend un dispositif de mixage selon l'invention.

Le dispositif de mixage du flux d'air peut être implanté directement dans le boîtier. Ou bien, le dispositif de mixage du flux d'air peut constituer un module indépendant rapporté dans le boîtier.

D'autres caractéristiques et avantages de la présente invention apparaîtront encore à la lecture de la description qui suit d'exemples de réalisation donnés à titre illustratif en référence aux figures. Sur ces figures :
- la Figure 1 est une vue générale en coupe d'un appareil de chauffage et de climatisation comportant un dispositif de mixage conforme à la présente invention ;
- la Figure 2 est une vue partielle en coupe de l'appareil représenté sur la Figure 1 fonctionnant en mode froid ;
- la Figure 3 est une vue similaire à la Figure 2, l'appareil fonctionnant en position intermédiaire ;
- la Figure 4 est une vue similaire aux Figures 2 et 3, l'appareil de chauffage et de climatisation fonctionnant en mode chaud ;
- les Figures 5 à 8 représentent diverses architectures possibles d'un appareil de chauffage et/ou de climatisation comportant un dispositif de mixage conforme à la présente invention ;
- la Figure 9 représente un appareil de chauffage et de climatisation comportant un dispositif de mixage conforme à l'invention constituant un module indépendant rapporté dans le boîtier de l'appareil de chauffage ;
- les Figures 10 à 15 illustrent différentes réalisations du mécanisme de commande des déplacements de la plaque obturatrice et du volet de réglage de la section de passage du conduit d'air froid ;
- les Figures 16 à 18 illustrent trois variantes de réalisation possibles d'un dispositif de mixage conforme à l'invention comportant des moyens d'équilibrage des efforts de commande exercés sur la plaque obturatrice et/ou sur le volet de réglage de la section de passage du conduit d'air froid ;
- les Figures 19 à 21 illustrent trois variantes de réalisation de moyens d'étanchéité à l'air entre le panneau et la plaque obturatrice ;
- la Figure 22 représente un exemple d'aménagement de moyens de déflexion sur le volet de réglage de la section de passage du conduit d'air froid permettant de réaliser une mise au point aérothermique de l'appareil de chauffage et/ou de climatisation ; et
- les Figures 23 à 26 représentent divers aménagements permettant de réduire le niveau de bruit de fonctionnement du dispositif de mixage de l'invention.

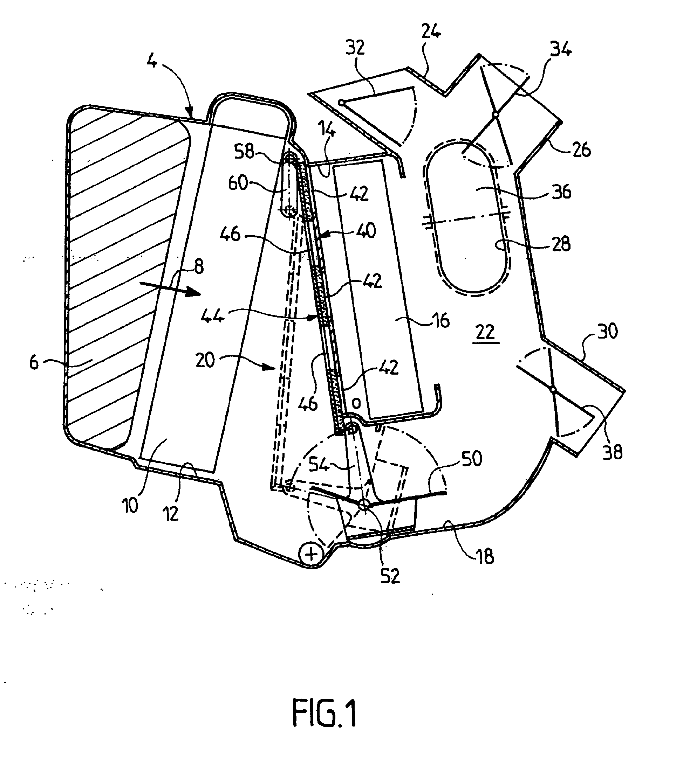

On a représenté sur la Figure 1 une vue générale en coupe d'un appareil de chauffage, de climatisation et de ventilation conforme à l'invention. Il comporte un boîtier 4 dans lequel est aménagée une arrivée d'air 6 d'un flux d'air principal schématisé par la flèche 8. Un évaporateur 10 est monté dans un conduit principal 12 aménagé dans le boîtier 4. Le conduit principal 12 se divise ensuite en un conduit chaud 14 dans lequel est monté un radiateur de chauffage 16 et un conduit froid 18 qui constitue une dérivation parallèle au conduit chaud 14. L'appareil de chauffage peut fonctionner en mode chaud, en mode froid ou en mode intermédiaire. En mode chaud, le conduit d'air froid est obturé et la totalité de l'air traverse le radiateur de chauffage 16. En mode froid, c'est au contraire le conduit d'air chaud qui est obturé et la totalité du flux d'air passe au travers du conduit d'air froid 18. En mode intermédiaire, le flux d'air 8 est réparti en proportions réglables entre le conduit chaud et le conduit froid. Le flux chaud et le flux froid se mélangent dans une chambre de mixage 22. L'air est ensuite dirigé vers des points d'utilisation au moyen de canalisations. Dans l'exemple représenté, on trouve une sortie 24 de dégivrage/désembuage du pare-brise, une sortie 26 d'aérateur de planche de bord, une sortie 28 de chauffage pieds et enfin une sortie 30 destinée à acheminer l'air vers les places arrière du véhicule. Des volets de réglage, désignés respectivement par les références 32, 34, 36 et 38, permettent de régler au gré des utilisateurs la quantité d'air qui circule par chacune de ces sorties. Les fonctions d'obturation du conduit chaud 14 et du conduit froid 18, ainsi que la fonction de répartition du flux d'air entre ces deux conduits en position intermédiaire, sont obtenues au moyen d'un dispositif, appelé dans ce qui suit dispositif de mixage de l'air, désigné par la référence générale 20.

Dans l'exemple de réalisation représenté, le dispositif de mixage 20 comprend un panneau 40 monté en position fixe dans le boîtier 4 et comportant des ajours 42, au nombre de trois selon la figure. Le dispositif de mixage comporte également une plaque obturatrice 44 comportant des ouvertures 46. La plaque d'obturation 44 est mobile entre une position d'obturation et une position d'ouverture. Dans la position d'obturation, représentée en traits pleins sur la figure, les ajours du panneau 40 et les ouvertures 46 de la plaque d'obturation ne se chevauchent pas, de telle sorte que la superposition de la plaque obturatrice et du panneau obture entièrement le conduit chaud 14. Comme on le détaillera plus en détail ultérieurement, des moyens d'étanchéité sont prévus entre le panneau et la plaque obturatrice afin de réaliser une obturation étanche du conduit 14.

Dans sa position d'ouverture, représentée en traits pointillés sur la figure, la plaque obturatrice 14 est espacée, au moins à l'une de ses extrémités, du panneau 40. De cette manière, les ajours du panneau et les ouvertures de la plaque ne se recouvrent pas, ce qui permet le passage de l'air.

Le dispositif de mixage comprend également un élément d'obturation du conduit d'air froid 18. Dans l'exemple représenté, cet élément est constitué par un volet 50 monté rotatif autour d'un axe 52. Le volet 50 est apte à pivoter entre une position ouverte, représentée en traits pleins sur la figure, et une position d'obturation, représentée en traits pointillés, dans laquelle les extrémités du volet 50 viennent en appui sur des portées aménagées dans le boîtier afin d'obturer de manière étanche le conduit froid 18. Le mouvement de rotation du volet 50 peut être commandé depuis l'extérieur du boîtier, par exemple par l'intermédiaire de l'axe 52 dont le volet 50 est solidaire. Le volet 50 comporte un bras 54 orienté sensiblement perpendiculairement à son plan. L'extrémité libre du bras 54 est articulée à l'extrémité inférieure, selon la Figure 1, de la plaque obturatrice 44. A son extrémité supérieure, la plaque obturatrice 44 comporte deux pions 58 qui sont aptes à coulisser chacun dans une rampe 60 aménagée dans le boîtier 4.

Ainsi, le mouvement du volet 50 est une simple rotation, tandis que le mouvement de la plaque obturatrice 44 est un mouvement combiné de rotation et de translation. Cette cinématique constitue une caractéristique préférée avantageuse de l'invention. En effet, pendant la quasi-totalité de son déplacement en translation, la plaque obturatrice 44 n'est pas au contact du panneau 40. Les résistances de frottement à vaincre sont ainsi très faibles puisqu'elles se limitent au coulissement des pions 58 dans les rampes 60 et au mouvement de pivotement de l'extrémité inférieure de la plaque obturatrice 44 autour de l'extrémité libre du bras 54. En revanche, en fin de course d'obturation, le bras 54 du levier 50 exerce un effort sur la plaque obturatrice qui est sensiblement perpendiculaire au plan de joint entre le panneau 40 et la plaque obturatrice 44. Cet effort perpendiculaire permet un écrasement du joint d'étanchéité et assure ainsi une étanchéité parfaite au flux d'air.

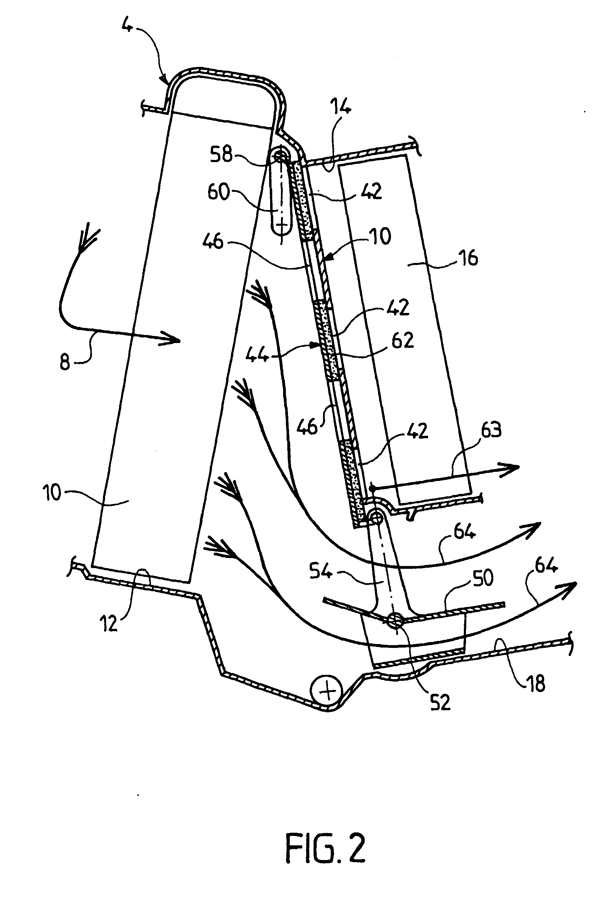

On a représenté sur la Figure 2 une vue partielle de l'appareil de chauffage, de ventilation et de climatisation représenté sur la Figure 1 en mode froid. Dans cette position, le conduit d'air chaud 14 est entièrement obturé par la plaque obturatrice 44. Comme on le remarque, cette dernière est revêtue d'un joint d'étanchéité, par exemple un joint en mousse 62, qui s'applique de manière étanche contre le panneau 40. Les deux pions 58 sont à la partie supérieure des rampes 60. La forme des rampes est conçue de telle manière que l'extrémité supérieure de la plaque obturatrice 44 soit plaquée contre le panneau 40 en fin de course. L'extrémité inférieure de la plaque obturatrice 44 est appliquée contre le panneau 40 par le levier 54, la direction de l'effort étant représenté par la flèche 63. En revanche, le conduit chaud 18 est entièrement ouvert, les faces du volet 50 étant disposées sensiblement parallèlement au flux d'air 64. Comme on le remarque, dans cette réalisation, le volet 50 comporte des déflecteurs d'air, par exemple un pontet 66, qui permet la mise au point aérothermique de l'appareil de chauffage. Des exemples de tels déflecteurs seront décrits plus en détail ultérieurement.

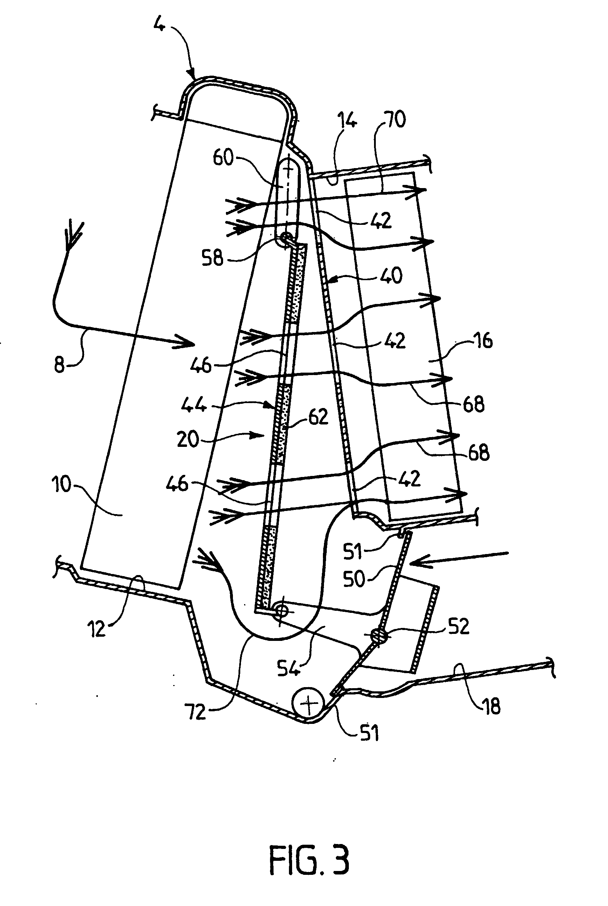

Sur la Figure 3, le dispositif de mixage 20 est représenté en mode chaud. Dans cette position, le conduit d'air froid 18 est entièrement obturé par le volet 50 dont les extrémités sont en appui contre des portées 51 du boîtier. On remarque que les pions 58 sont situés à l'extrémité inférieure des rampes 60 et que les ajours 42 du panneau 40 sont situés en regard des ouvertures 46 de la plaque obturatrice 44. De la sorte, la section de passage offerte au filet d'air 68 qui traverse les ouvertures 46 et les ajours 42 est maximale. D'autres filets d'air, désignés par la référence 70, ne traversent pas la plaque obturatrice 44, mais passent au-dessus de son extrémité supérieure avant de traverser l'ajour supérieur du panneau 40. Enfin, des filets d'air, désignés par la référence 72, passent entre l'extrémité inférieure de la plaque obturatrice 44 et le fond du boîtier 4. Ces filets d'air, canalisés par le volet 50 en position fermée, remontent vers le panneau 40. Ce flux d'air additionnel contribue à répartir l'air de manière encore plus homogène sur toute la surface frontale du radiateur 16. Cette disposition garantit un coefficient d'adaptation thermique optimal.

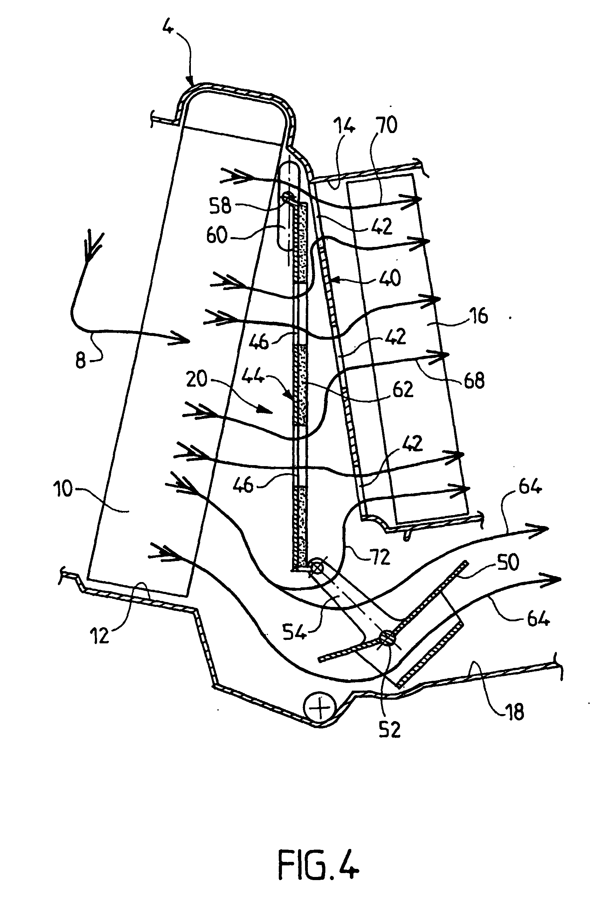

On a représenté sur la Figure 4 le dispositif de mixage 20 en position intermédiaire. Le volet 50 est dans une position intermédiaire entre sa position entièrement ouverte représentée sur la Figure 2 et sa position entièrement fermée représentée sur la Figure 3. De même, la plaque obturatrice 44 est dans une position intermédiaire entre sa position fermée représentée sur la Figure 2 et sa position entièrement ouverte représentée sur la Figure 3. On remarquera que les pions 58 sont situés à une position intermédiaire entre les positions extrêmes représentées sur les Figures 2 et 3. Dans ces conditions, la plaque obturatrice est espacée du panneau 40, mais d'une distance inférieure à celle de sa position entièrement ouverte (Figure 3). Les filets d'air 68 peuvent passer au travers des ouvertures 46 de la plaque obturatrice et des ajours 42 du panneau 40. Toutefois, il existe un certain décalage entre les ouvertures de la plaque et les ajours du panneau, de telle sorte que le trajet des filets d'air 68 n'est pas rectiligne. Un flux d'air 70 peut également s'écouler par dessus l'extrémité supérieure de la plaque obturatrice 42, comme décrit en référence à la Figure 3. Cependant, l'espace disponible est plus limité. Le flux d'air 72 qui passe sur l'extrémité inférieure de la plaque obturatrice 44 constitue également un flux additionnel qui s'ajoute aux flux 68 et 72. Enfin, les flux 64 constituent un flux froid qui circule au travers du conduit d'air froid 18 obturé seulement partiellement par la position intermédiaire du volet 50. Les flux d'air chaud ayant traversé le radiateur de chauffage 16 et les flux d'air froid 64 ayant traversé le conduit d'air froid 18 se mélangent ensuite dans la chambre de mixage 22 (Figure 1) pour donner un flux d'air dont la température est intermédiaire entre celle du flux chaud et celle du flux froid.

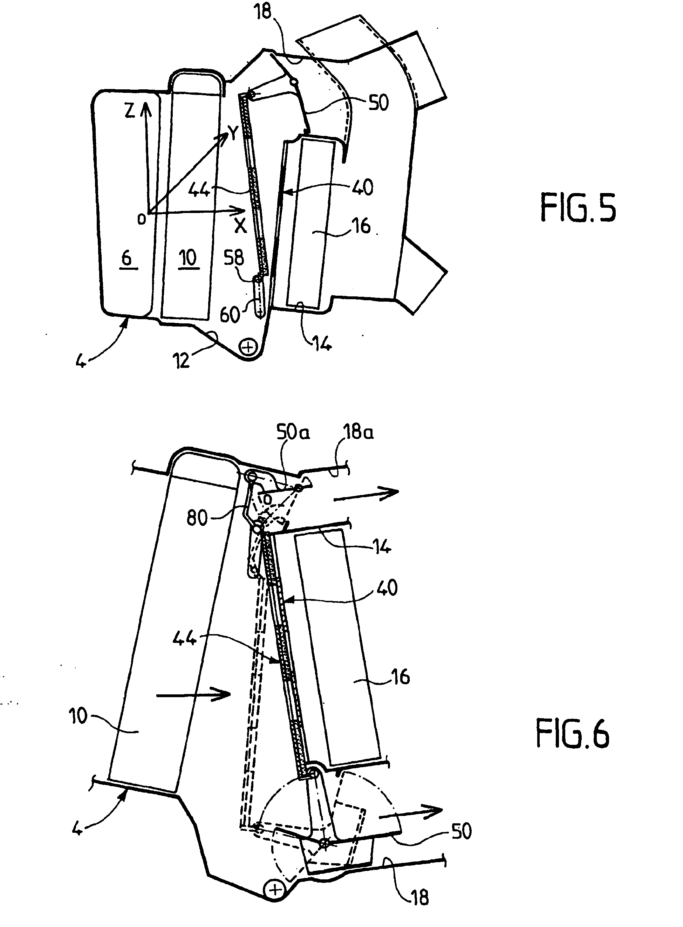

L'appareil de chauffage et de climatisation représenté sur les Figures 1 à 4 comporte un conduit d'air chaud unique et un conduit d'air froid unique. On a représenté sur les Figures 5 à 8 des variantes de réalisation de cet appareil comportant plusieurs conduits d'air froid ou une disposition différente de ces conduits. Sur la Figure 5, l'axe OX du trièdre trirectangle XYZ désigne la direction longitudinale avant-arrière du véhicule, l'axe OY la direction latérale, et l'axe OZ la direction verticale. Le conduit d'air froid 18 est disposé au-dessus du radiateur de chauffage 16 et le conduit d'air chaud 14 se trouve en dessous du conduit d'air froid 18. Hormis cette différence, le fonctionnement du dispositif de mixage est identique à celui qui a été décrit en référence aux Figures 1 à 4.

Le dispositif de mixage représenté sur la Figure 6 comporte un conduit d'air chaud 14 unique, mais deux conduits d'air froid. Le conduit d'air froid 18 est placé en dessous du radiateur de chauffage 16, comme dans le mode de réalisation des Figures 1 à 4. En outre, le dispositif comporte un second conduit d'air froid, désigné par la référence 18a, situé au-dessus du radiateur de chauffage. Un volet pivotant 50a est monté dans le conduit 18a. Ce volet est actionné par l'intermédiaire d'un bras 80 solidaire de l'extrémité supérieure de la plaque obturatrice 44. Le déplacement de la plaque obturatrice commande ainsi la rotation du volet 50a. De la sorte, une commande unique pilote le déplacement de trois organes simultanément, à savoir le volet 50, la plaque obturatrice 44 et le volet 50a. Le conduit d'air froid additionnel 18a peut être utilisé pour faire un apport d'air froid supplémentaire afin de distribuer une quantité d'air froid plus importante ou pour faciliter la gestion des écarts de température ou de répartition d'air dans les différentes bouches de diffusion d'air de l'appareil. Dans ce deuxième cas, des aménagements sur le volet 50a ou à l'intérieur du conduit 18a pourront être faits pour calibrer ou diriger précisément le flux d'air.

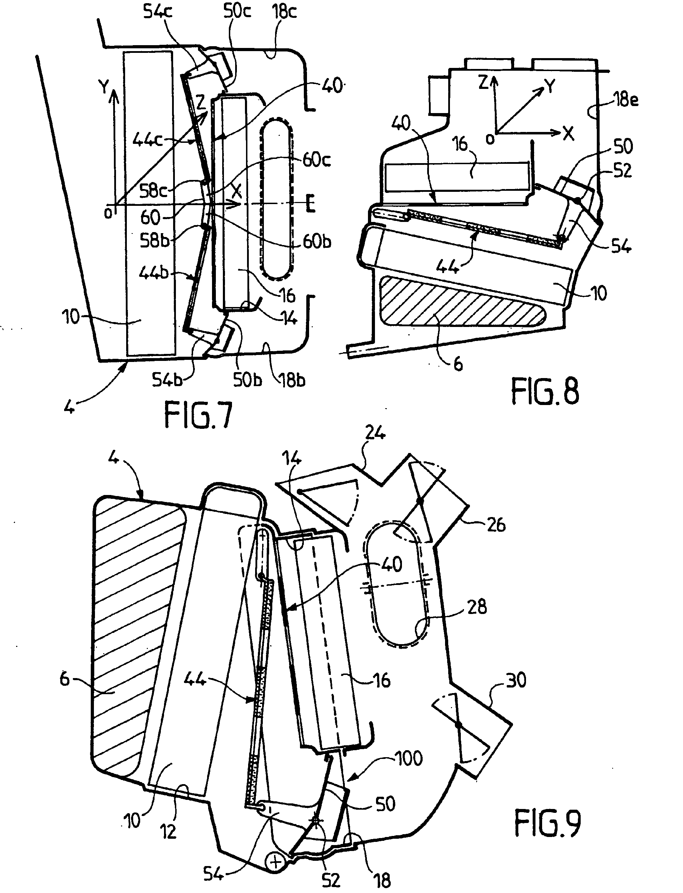

Sur la Figure 7, le radiateur de chauffage 16 est vertical, comme dans les modes de réalisation décrits précédemment. Il comporte deux conduits froids 18b et 18c disposés latéralement par rapport à un conduit d'air chaud unique 14. Des volets pivotants 50b et 50c sont montés dans chacun des canaux 18b et 18c. Bien que le conduit d'air chaud 14 soit unique, le dispositif de mixage comporte deux plaques obturatrices 44b et 44c. A l'une de leurs extrémités, les plaques obturatrices sont articulées sur des bras 54b et 54c solidaires des volets 50b et 50c. A leur autre extrémité, les plaques obturatrices comportent des pions 58b et 58c qui coulissent dans une rampe 60 constituée de deux parties 60b et 60c. Dans ce mode de réalisation, une commande unique pilote le déplacement de quatre organes simultanément.

Alors que, dans les modes de réalisation précédents, le radiateur de chauffage 16 est en position verticale, il est en position horizontale dans la réalisation de la Figure 8. Le dispositif de mixage comporte un conduit d'air chaud unique 14 et un conduit d'air froid unique 18e situé à l'avant du véhicule par rapport au radiateur de chauffage 16. En dehors de cette disposition différente du radiateur et des conduits d'air chaud et froid, le fonctionnement du volet 50 d'obturation du conduit d'air froid et de la plaque obturatrice 44 est identique au fonctionnement du mode de réalisation qui a été décrit en référence aux Figures 1 à 4.

Le dispositif de mixage désigné par la référence générale 20 (Figure 1) peut être intégré au boîtier de l'appareil de chauffage et de climatisation 4. Il peut également être constitué sous la forme d'un module indépendant 100 (Figure 9). Le module 100 comprend les conduits d'air chaud 14 et froid 18, le radiateur de chauffage 16 installé dans le conduit d'air chaud 14, le panneau 40, la plaque obturatrice 44 et le volet 50, ainsi que leur mécanisme d'actionnement. Ces différentes pièces sont assemblées à part en vue de constituer un ensemble unique qui est monté d'une seule pièce dans le boîtier 4. A cet effet, le boîtier peut être constitué de deux demi-coquilles qui s'ouvrent pour permettre l'introduction du module de mixage d'air 100. Ou bien, le boîtier 4 peut comporter une ouverture latérale permettant un montage en tiroir du module 100.

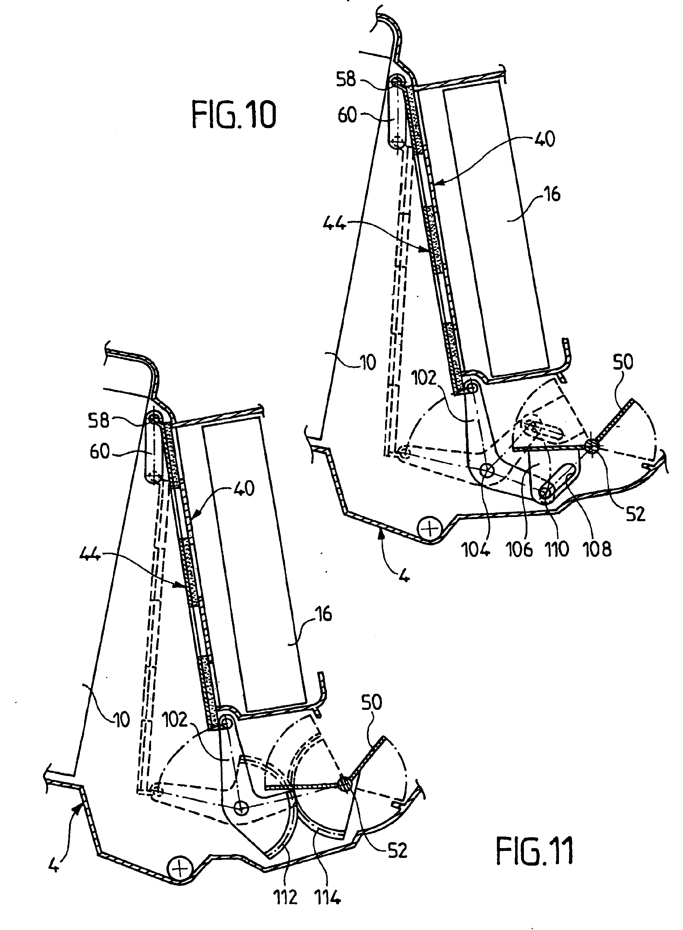

Dans les variantes de réalisation décrites en référence aux Figures 1 à 9, le déplacement de la plaque obturatrice 44 est commandé directement par le bras 54 solidaire du volet rotatif 50. Ce mécanisme de commande est le plus simple. Toutefois, selon l'invention, le mécanisme de commande peut être plus complexe. Il peut comporter, par exemple, comme représenté sur la Figure 10, un levier de commande 102 indépendant monté tournant autour d'un axe 104 distinct de l'axe 52 du volet rotatif 50. A l'une de ses extrémités, le levier 102 est articulé sur l'extrémité inférieure (selon la Figure 10) de la plaque obturatrice 44. A son autre extrémité, il est articulé sur un bras 106 solidaire du volet rotatif 50. Le bras 106 comporte une lumière 108 dans laquelle se déplace un pion 110 monté à l'extrémité du levier 102. Le pivotement du levier de commande 102 est exécuté par l'intermédiaire de son axe de rotation 104. Le levier 102 commande ainsi simultanément la rotation du volet 50 et le mouvement combiné de rotation et de translation de la plaque obturatrice 44. Le fait d'utiliser un levier de commande indépendant offre une plus grande souplesse pour la disposition des éléments, l'emplacement de l'axe de rotation du levier de commande, ou la position de l'axe de rotation du bras.

On a représenté sur la Figure 11 une variante de réalisation du mécanisme de commande. Dans cette variante, le levier de commande 102 comporte un secteur denté 112 et le volet rotatif 50 comporte un secteur denté 114 qui engrène avec le secteur denté 112. La transmission du mouvement de rotation du levier 102 vers le volet 50 se fait par l'intermédiaire des secteurs dentés 112 et 114. La commande du déplacement de la plaque obturatrice 44 est identique à celle du mode de réalisation représenté sur la Figure 10.

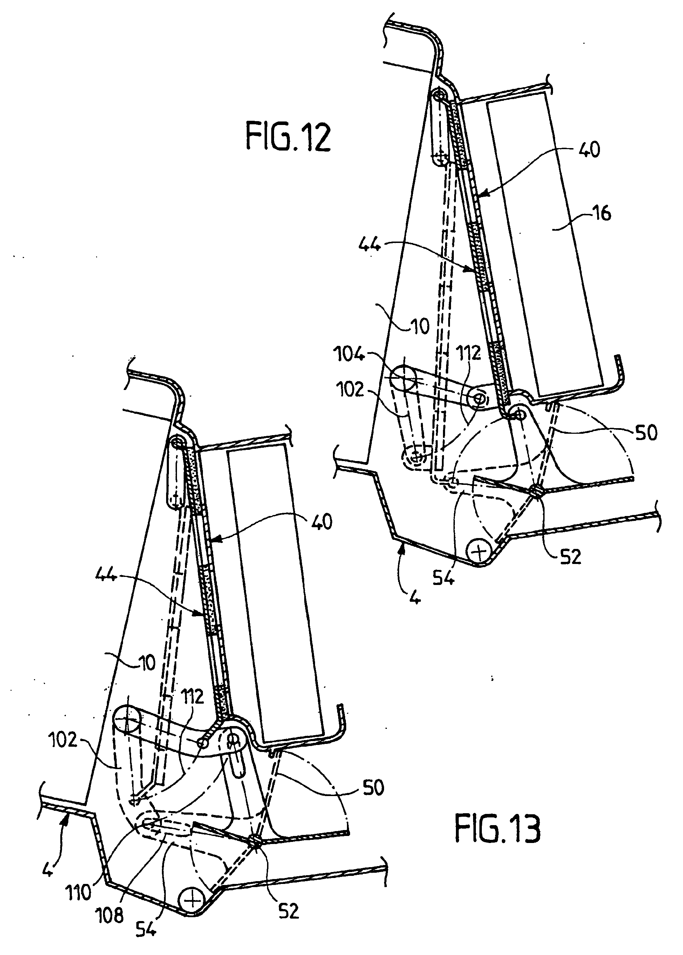

Sur la Figure 12, le levier de commande 102 est mobile autour d'un axe de rotation 104 situé du côté de la plaque obturatrice 44, opposé à l'évaporateur 16. La cinématique de déplacement de la plaque obturatrice 44 est ainsi différente. L'extrémité de la plaque obturatrice parcourt en effet un arc de cercle 112 dont la convexité est inversée par rapport à celle des modes de réalisation décrits précédemment. Le bras 54 du volet rotatif 50 est articulé à l'extrémité inférieure (selon la figure) de la plaque obturatrice 44.

Sur la Figure 13, le levier 102 est articulé, d'une part, à l'extrémité inférieure de la plaque obturatrice 44 et, d'autre part, à l'extrémité du levier 54 solidaire du volet rotatif 50. A cet effet, le bras 54 comporte une lumière 108 dans laquelle coulisse un pion 110 monté à l'extrémité du levier de commande 102. Comme dans la variante de la Figure 12, l'axe de rotation 104 du levier 102 est situé du côté de la plaque obturatrice 44 opposée au radiateur de chauffage 16. La convexité de l'arc de cercle 112 est par conséquent la même.

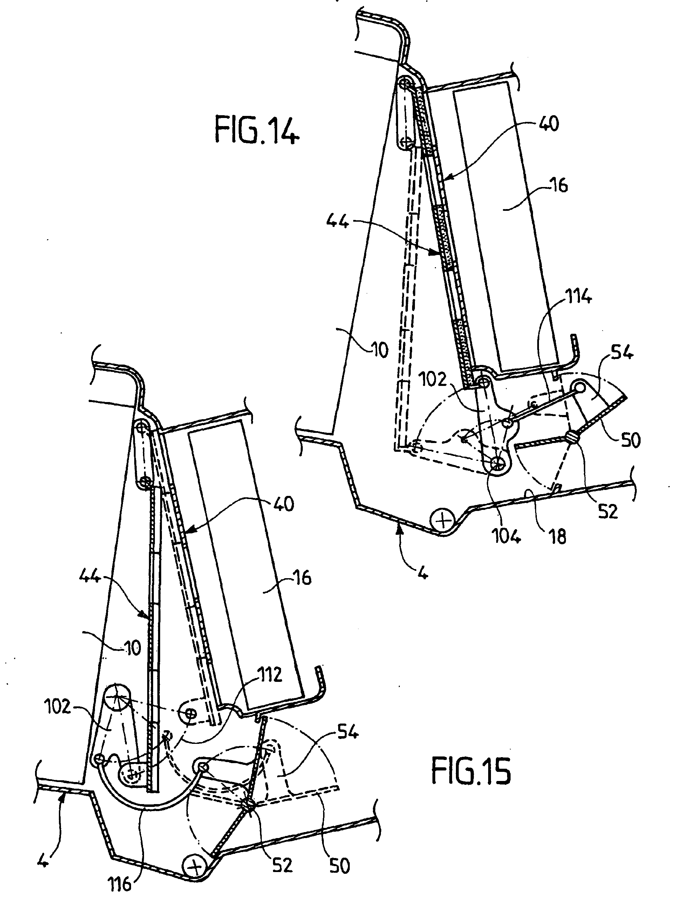

Dans les variantes de réalisation des Figures 10 à 13, le déplacement de la plaque obturatrice 44 et du volet rotatif 50 est commandé directement par le levier de commande 102. Au contraire, dans les variantes des Figures 14 et 15, le déplacement du volet rotatif 50 est commandé indirectement par l'intermédiaire d'une bielle de liaison 114 qui relie le levier de commande 102 au bras 54 du volet rotatif 50. Sur la Figure 14, le levier 102 pivote autour d'un axe de rotation 104 situé dans le conduit froid 18, à proximité du volet rotatif 50. En conséquence, la bielle de liaison 104 peut présenter une forme rectiligne. Au contraire, dans la variante de la Figure 15, le levier de commande 102 est situé entre l'évaporateur 10 et la plaque obturatrice 44, à distance du volet rotatif 50. En conséquence, la bielle de liaison 116 présente une forme coudée de manière à contourner l'extrémité inférieure (selon la figure) de la plaque obturatrice 44. En revanche, dans les variantes des Figures 14 et 15, le levier de commande 102 est articulé directement à l'extrémité inférieure de la plaque obturatrice 44, sans bielle de liaison intermédiaire.

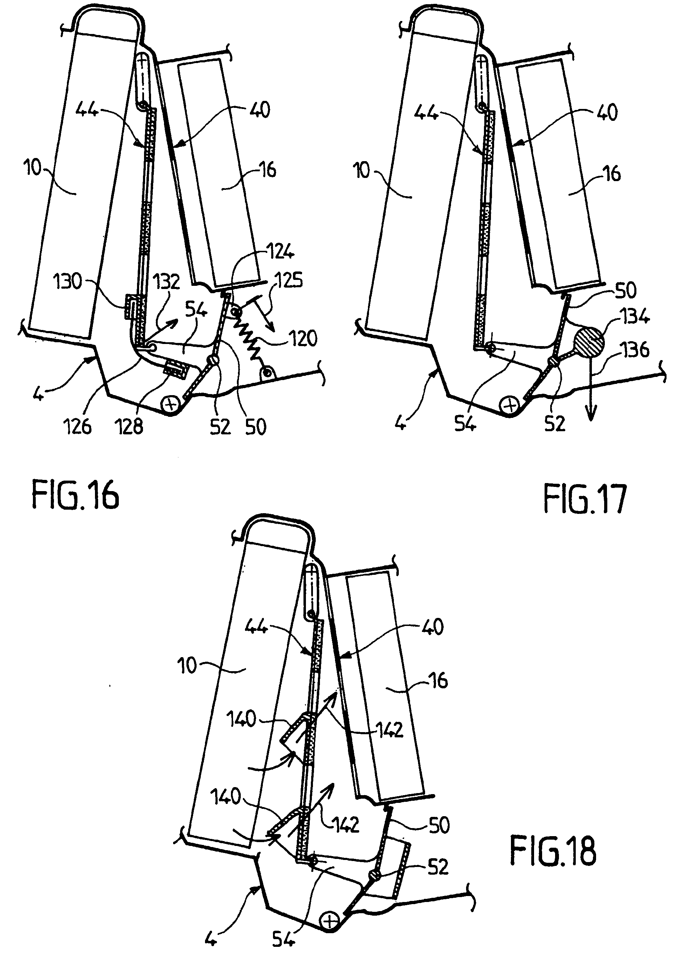

Le dispositif de mixage de l'invention peut comporter des moyens qui permettent de maintenir la constance de l'effort de commande nécessaire pour commander le déplacement du volet rotatif 50 et de la plaque obturatrice 44. Différents exemples de ces moyens sont illustrés sur les Figures 16 à 18. Sur la Figure 16, un ressort hélicoïdal 120 est monté, à l'une de ses extrémités, sur une paroi du boîtier 4 et, à son autre extrémité, sur un bossage 124 solidaire du volet rotatif 50. Le ressort hélicoïdal 120 est un ressort de traction qui exerce un effort de traction, comme schématisé par la flèche 125, sur l'extrémité du volet rotatif 50, ce qui a pour effet de contrebalancer le poids de la plaque obturatrice 44. L'effort de commande est ainsi allégé grâce au ressort hélicoïdal 120. Sur la même Figure 16, on a représenté une variante de réalisation possible du ressort hélicoïdal 16. Une lame flexible 126 a une extrémité 128 montée dans un logement solidaire du bras 54 et une autre extrémité engagée dans un logement 130 solidaire de l'extrémité inférieure de la plaque obturatrice 44. La lame élastique 126, tendant à conserver sa forme rectiligne, exerce un effort, schématisé par la flèche 132, dont l'action est équivalente à celle du ressort hélicoïdal 120.

Dans la variante de la Figure 17, le ressort hélicoïdal 120 a été remplacé par un contrepoids 134 exerçant une action 136 qui équilibre le poids de la plaque obturatrice 44. Enfin, sur la Figure 18, on a prévu deux écopes 140 sur la face de la plaque obturatrice 44 exposée au flux d'air 8 (Figure 1). L'air, en s'engouffrant dans ces écopes, produit des forces de réaction, schématisées par les flèches 142, sur la plaque obturatrice 44. Les forces 142 tendent à soulever la plaque, réduisant ainsi l'effort nécessaire à son déplacement.

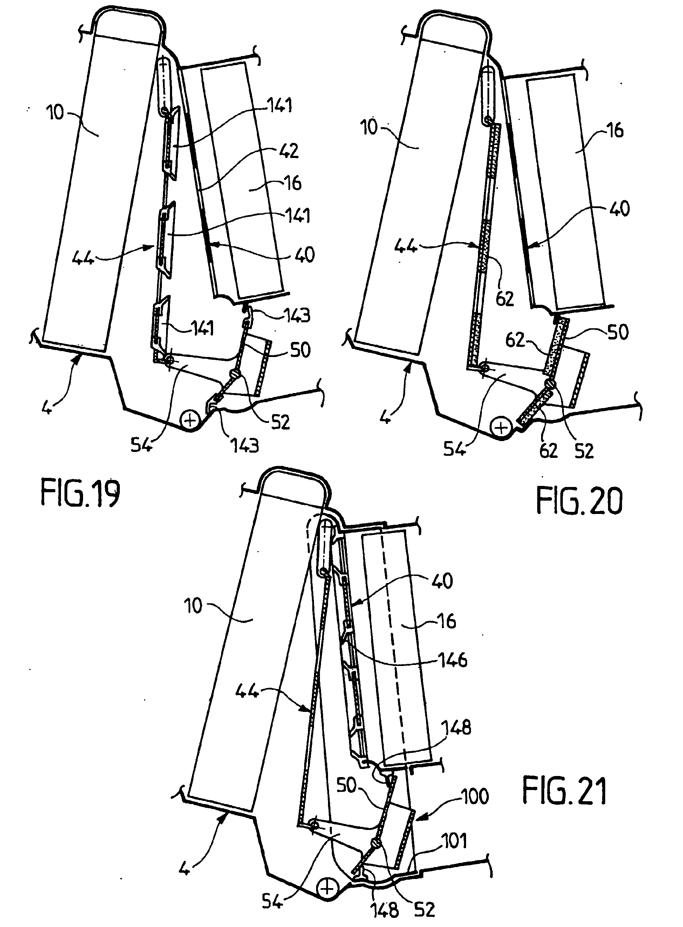

On a représenté sur les Figures 19 à 21 diverses variantes de réalisation possibles des moyens d'étanchéité entre la plaque obturatrice 44 et le panneau 40. Sur la Figure 19, des lèvres souples 141 sont surmoulées sur la plaque obturatrice 44. En position d'obturation, les lèvres 140 viennent s'appliquer contre les ajours 42 du panneau 40, assurant ainsi une étanchéité. Sur la Figure 20, la plaque obturatrice 44 est revêtue d'un joint en mousse 62, déjà mentionné en référence à la Figure 2. En variante, on pourrait également réaliser un surmoussage sur la plaque obturatrice 40. Inversement, le joint en mousse pourrait être prévu sur le panneau 40 au lieu d'être prévu sur la plaque obturatrice. De manière similaire, un joint en mousse 62 peut être prévu sur les faces du volet rotatif 50.

De manière similaire (Figure 19), des lèvres d'étanchéité 143 sont prévues aux extrémités du volet rotatif 50.

Sur la Figure 21, le dispositif de mixage constitue un module indépendant 100 (voir Figure 9). Des lèvres d'étanchéité souples 146 sont surmoulées sur le panneau 40, et d'autres lèvres 148 sont rapportées sur le boîtier 101 du module de mixage 100. Bien entendu, il est possible de combiner les différents moyens d'étanchéité décrits en référence aux Figures 19 à 21, ou d'utiliser encore d'autres types d'étanchéité. De manière générale, tout type de joint d'étanchéité et tout type de matériau peuvent être utilisés.

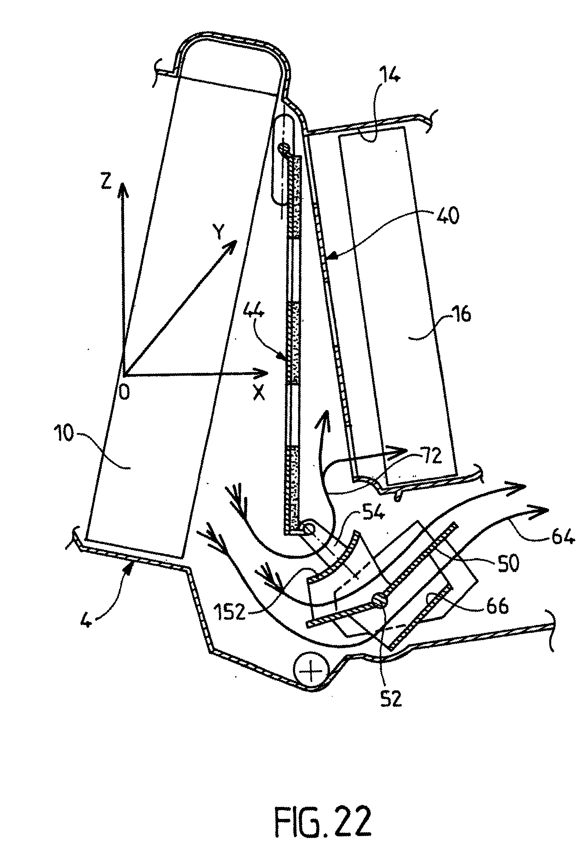

Comme représenté sur la Figure 22, des moyens déflecteurs d'air, des déformations locales, des masques, des conduits de guidage d'air peuvent être implantés sur les éléments du dispositif de mixage ou sur le boîtier pour contribuer à la mise au point aérothermique de l'appareil. Dans la variante représentée sur la Figure 22, le volet rotatif 50 comporte un pontet déflecteur d'air 66 sur sa face inférieure pour concentrer le flux d'air froid 64 dans une zone ciblée de l'appareil. Le volet 50 comporte également des nervures 150 perpendiculaires à son plan. Ces nervures peuvent être droites ou inclinées pour permettre une déflection ou une canalisation de l'air suivant l'axe des Y (direction transversale du véhicule). Enfin, sur sa face supérieure, le volet rotatif 50 comporte un volet déflecteur 152 pour diriger le flux d'air 72 vers le conduit d'air chaud 14. Le pontet déflecteur d'air chaud 152 contribue ainsi à répartir le flux d'air sur toute la surface du radiateur 16, garantissant ainsi une adaptation thermique optimale.

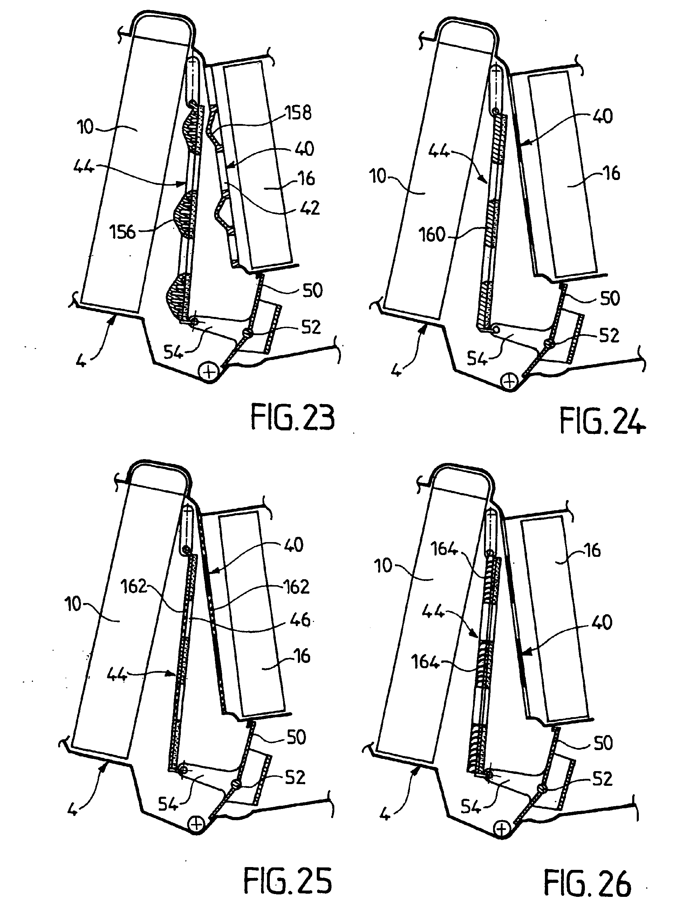

Enfin, comme représenté sur les Figures 23 à 26, le dispositif de mixage de l'invention peut comporter des moyens de réduction du niveau de bruit. La plaque obturatrice 44 et les formes de la section d'entrée du conduit d'air chaud 14 peuvent être définies de manière à limiter le niveau de bruit résultant de la circulation de l'air dans le boîtier 4. Sur la Figure 23, les formes de la plaque obturatrice 44 et celles du panneau 40 sont aérodynamiques pour réduire la résistance à l'air. A cet effet, on a prévu des éléments 156 surmoulés sur la plaque obturatrice 44 et des éléments 158 surmoulés sur le panneau 40. Cette disposition limite les perturbations aéroliques de type tourbillon d'air qui sont génératrices de bruit.

Les angles des ajours 42 du panneau 40 et des ouvertures 46 de la plaque obturatrice 44 peuvent comporter un rayon. Cette disposition élimine le bruit de sifflement généré au passage d'un flux d'air sur une arête agressive. Les surmoulages 156 et 158 peuvent constituer des corps creux qui auront un rôle d'absorption du bruit. Pour réaliser ces dispositions, on pourra utiliser l'âme des éléments et/ou le système d'étanchéité, ou les deux en combiné.

Dans la variante de la Figure 24, on a prévu des inserts 160 en matière allégée, par exemple en matière plastique avec injection de gaz, ou tout autre matériau dont les caractéristiques contribuent à réduire le niveau sonore résultant d'une circulation d'air.

Dans la variante de réalisation de la Figure 25, on a implanté des écrans 162 perméables à l'air dans les ouvertures 46 de la plaque obturatrice 44. Ces écrans peuvent être des grilles ou un moyen analogue dont la fonction sera d'homogénéiser le flux d'air et de limiter ainsi le niveau sonore résultant de sa circulation. Des écrans perméables 162 similaires peuvent être aménagés dans les ajours 42 du panneau 40. Les écrans 162 pourront être intégrés directement dans la plaque obturatrice 44 et le panneau 40 ou réalisés séparément puis rapportés.

Dans la variante de réalisation représentée sur la Figure 26, des inserts 164 revêtus d'un matériau absorbant sont disposés sur la face de la plaque obturatrice 44 exposée au flux d'air. Des inserts similaires peuvent être prévus sur la face du panneau 40 exposée au flux d'air. Le matériau absorbant peut être une mousse de polyuréthane. Les inserts 164 ont pour fonction d'absorber le bruit généré par la circulation de l'air.

L'invention s'applique aux appareils de chauffage et/ou climatisation de l'habitacle des véhicules automobiles aptes à envoyer un flux d'air chaud et/ou climatisé soit dans une seule zone soit dans plusieurs zones de l'habitacle.

## Revendications

1. Dispositif de mixage, pour répartir en proportions variables un flux d'air principal, entre au moins un conduit d'air chaud (14) et au moins un conduit d'air froid (18), comportant au moins un panneau (40) comportant au moins un ajour (42) disposé dans le conduit d'air chaud (14), et une plaque obturatrice (44) mobile entre une position d'ouverture dans laquelle elle ne recouvre pas l'ajour (42) du panneau (40) et une position d'obturation dans laquelle elle obture le panneau (40), au moins un volet (50) de réglage de la section de passage du conduit d'air froid (18) mobile entre une position d'ouverture et une position d'obturation, un mécanisme de commande (54, 102, 114) pour commander de manière synchronisée le déplacement de la plaque obturatrice (44) et le déplacement du volet de réglage (50) de la section de passage du conduit d'air froid (18) entre leur position d'ouverture et leur position d'obturation, **caractérisé en ce que** la plaque obturatrice (44) se déplace selon un mouvement combiné de translation et de rotation, la plaque obturatrice (44) étant écartée du panneau (40) en position d'ouverture.

2. Dispositif selon la revendication 1, **caractérisé en ce que** le panneau (40) comporte une pluralité d'ajours (42) et la plaque obturatrice (44) une pluralité de découpes (46), les ajours du panneau (40) et les découpes (46) de la plaque obturatrice (44) étant disposés les uns par rapport aux autres de telle manière que le conduit d'air chaud (14) est obturé quand la plaque obturatrice (44) est dans sa position d'obturation.

3. Dispositif selon l'une des revendications 1 à 2, **caractérisé en ce qu**'il comporte au moins une rampe de guidage (60) et en ce que la plaque obturatrice (44) comporte au moins un pion (58) qui coulisse dans la rampe de guidage (60).

4. Dispositif selon l'une des revendications 1 à 3, **caractérisé en ce que** ledit conduit d'air chaud (14) comprend un radiateur de chauffage (16) sensiblement vertical.

5. Dispositif selon la revendication 4, **caractérisé en ce qu'**il comporte un conduit d'air froid (18) unique situé en dessous du conduit d'air chaud (14).

6. Dispositif selon la revendication 4, **caractérisé en ce qu**'il comporte un conduit d'air froid (18) unique situé au-dessus du conduit d'air chaud (14).

7. Dispositif selon la revendication 4, **caractérisé en ce qu'**il comporte un conduit d'air froid (18) situé au-dessous du conduit d'air chaud et un conduit d'air froid (18) situé au-dessus du conduit d'air chaud (14).

8. Dispositif selon la revendication 4, **caractérisé en ce qu**'il comporte un conduit d'air froid unique situé latéralement par rapport au conduit d'air chaud.

9. Dispositif selon la revendication 4, **caractérisé en ce qu**'il comporte deux conduits d'air froid situés latéralement de part et d'autre du conduit d'air chaud (14).

10. Dispositif selon l'une des revendications 1 à 3, **caractérisé en ce que** ledit conduit d'air chaud (14) comprend un radiateur de chauffage (16) sensiblement horizontal.

11. Dispositif selon la revendication 10, **caractérisé en ce qu'**il comporte un conduit d'air froid (18) unique situé au-dessous du conduit d'air chaud.

12. Dispositif selon la revendication 10, **caractérisé en ce qu'**il comporte un conduit d'air froid (18) unique situé au-dessus du conduit d'air chaud (14).

13. Dispositif selon la revendication 10, **caractérisé en ce qu'**il comporte un conduit d'air froid (18) situé au-dessous du conduit d'air chaud (14) et un conduit d'air froid (18) situé au-dessus du conduit d'air chaud (14).

14. Dispositif selon la revendication 10, **caractérisé en ce qu**'il comporte un conduit d'air froid unique situé latéralement par rapport au conduit d'air chaud.

15. Dispositif selon la revendication 10, **caractérisé en ce qu'**il comporte deux conduits d'air froid situés latéralement de part et d'autre du conduit d'air chaud (14).

16. Dispositif selon l'une des revendications 1 à 15, **caractérisé en ce que** le mécanisme de commande comprend un levier de commande (102) qui commande le déplacement de la plaque obturatrice (44) et le déplacement du volet (50) de réglage de la section de passage du conduit froid (18).

17. Dispositif selon la revendication 16, **caractérisé en ce que** le levier de commande (102) commande le déplacement de la plaque obturatrice (44) et/ou le déplacement du volet (50) de réglage de la section de passage du conduit froid (18) par l'intermédiaire d'une bielle (114).

18. Dispositif selon la revendication 16, **caractérisé en ce que** le levier de commande (102) commande le déplacement du volet (50) de réglage de la section de passage du conduit d'air froid (18) par l'intermédiaire de secteurs dentés (112, 114).

19. Dispositif selon l'une des revendications 1 à 18, **caractérisé en ce que** la plaque obturatrice (44) et/ou le volet (50) de réglage de la section de passage du conduit froid (18) sont munis d'un dispositif d'équilibrage.

20. Dispositif selon la revendication 19, **caractérisé en ce que** le dispositif d'équilibrage comprend des ressorts (120, 126) ou une masselotte (134) ou des écopes (140).

21. Dispositif selon l'une des revendications 1 à 20, **caractérisé en ce que** la plaque obturatrice (44) et/ou le volet (50) de réglage de la section de passage du conduit d'air froid (18) comprennent des moyens déflecteurs d'air tels que des pontets (66, 152) ou des nervures (150) pour diriger le flux d'air chaud et/ou le flux d'air froid vers des zones choisies d'un dispositif de chauffage et/ou de climatisation de l'habitacle d'un véhicule automobile.

22. Dispositif selon l'une des revendications 1 à 21, **caractérisé en ce que** la plaque obturatrice (44) et/ou le panneau (40) comportent des moyens d'étanchéité pour assurer l'étanchéité du conduit d'air chaud (14) en position d'obturation de la plaque obturatrice (44).

23. Dispositif selon la revendication 22, **caractérisé en ce que** les moyens d'étanchéité comprennent des lèvres souples (141, 146) surmoulées sur le panneau (40) et/ou sur la plaque obturatrice (44).

24. Dispositif selon la revendication 22, **caractérisé en ce que** les moyens d'étanchéité comprennent un joint en mousse (62) prévu sur le panneau (40) et/ou sur la plaque obturatrice (44) et/ou sur le volet (50).

25. Dispositif selon l'une des revendications 1 à 24, **caractérisé en ce que** la plaque obturatrice (44) et/ou le panneau (40) comprennent des moyens pour atténuer le niveau de bruit engendré par leur fonctionnement.

26. Dispositif selon la revendication 25, **caractérisé en ce que** les moyens pour atténuer le niveau de bruit comprennent des éléments (156, 158) de profilage du panneau (40) et/ou de la plaque obturatrice (44).

27. Dispositif selon la revendication 25, **caractérisé en ce que** les moyens pour atténuer le niveau de bruit comprennent des inserts en matière allégée (160).

28. Dispositif selon la revendication 25, **caractérisé en ce que** les moyens pour atténuer le niveau de bruit comprennent des inserts (164) revêtus d'un matériau isolant.

29. Dispositif selon la revendication 25, **caractérisé en ce que** les moyens pour atténuer le niveau de bruit comprennent une grille (162) prévue dans les découpes de la plaque obturatrice (44) ou dans les ajours (42) du panneau (40).

30. Appareil de chauffage et/ou de climatisation, notamment de l'habitacle d'un véhicule automobile, comprenant un boîtier (4) délimitant un passage dans lequel circule un flux d'air (8), ce passage se divisant en au moins un conduit d'air chaud (14) et en au moins un conduit d'air froid (18), **caractérisé en ce qu'**il comporte un dispositif de mixage selon l'une des revendications 1 à 29.

31. Appareil selon la revendication 30, **caractérisé en ce que** le dispositif de mixage est implanté directement dans le boîtier (4).

32. Appareil selon la revendication 30, **caractérisé en ce que** le dispositif de mixage du flux d'air constitue un module (100) indépendant rapporté dans le boîtier (4).

## Claims

1. Mixing device, to distribute in variable proportions a main air flow, between at least one hot air canal (14) and at least one cold air canal (18), comprising at least one panel (40) comprising at least one opening (42) located in the hot air canal (14), and a sealing plate (44) that is mobile between an open position in which it does not cover the opening (42) of the panel (40) and a closed position in which it covers the panel (40), at least one flap (50) for adjusting the cross section of the passage of the cold air canal (18) that is mobile between an open position and a closed position, a control mechanism (54, 102, 114) to command in synchronisation the displacement of the sealing plate (44) and the displacement of the flap for adjusting (50) the cross section of the passage of the cold air canal (18) between their open position and their closed position, **characterised in that** the sealing plate (44) is displaced in a combined translation and rotation movement, wherein the sealing plate (44) is moved away from the panel (40) in the open position.

2. Device according to claim 1, **characterised in that** the panel (40) comprises a plurality of openings (42) and the sealing plate (44) a plurality of cut-outs (46), wherein the openings of the panel (40) and the cut-outs (46) of the sealing plate (44) are positioned with respect to each other so that the hot air canal (14) is covered when the sealing plate (44) is in its closed position.

3. Device according to any of claims 1 or 2, **characterised in that** it comprises at least one guide ramp (60) and **in that** the sealing plate (44) comprises at least one pin (58) which slides inside the guide ramp (60).

4. Device according to any of claims 1 to 3, **characterised in that** the hot air canal (14) comprises a heater (16) substantially vertical.

5. Device according to claim 4, **characterised in that** it comprises a single cold air canal (18) positioned below the hot air canal (14).

6. Device according to claim 4, **characterised in that** it comprises a single cold air canal (18) positioned above the hot air canal (14).

7. Device according to claim 4, **characterised in that** it comprises a cold air canal (18) positioned below the hot air canal and a cold air canal (18) positioned above the hot air canal (14).

8. Device according to claim 4, **characterised in that** it comprises a single cold air canal positioned laterally with respect to the hot air canal.

9. Device according to claim 4, **characterised in that** it comprises two cold air canals positioned laterally on either side of the hot air canal (14).

10. Device according to any of claims 1 to 3, **characterised in that** the hot air canal (14) comprises a heater (16) substantially horizontal.

11. Device according to claim 10, **characterised in that** it comprises a single cold air canal (18) positioned below the hot air canal.

12. Device according to claim 10, **characterised in that** it comprises a single cold air canal (18) positioned above the hot air canal (14).

13. Device according to claim 10, **characterised in that** it comprises a cold air canal (18) positioned below the hot air canal (14) and a cold air canal (18) positioned above the hot air canal (14).

14. Device according to claim 10, **characterised in that** it comprises a single cold air canal positioned laterally with respect to the hot air canal.

15. Device according to claim 10, **characterised in that** it comprises two cold air canals positioned laterally on either side of the hot air canal (14).

16. Device according to any of claims 1 to 15, **characterised in that** the control mechanism comprises a control lever (102) which commands the displacement of the sealing plate (44) and the displacement of the flap (50) which adjusts the cross section of the passage of the cold air canal (18).

17. Device according to claim 16, **characterised in that** the control lever (102) commands the displacement of the sealing plate (44) and/or the displacement of the flap (50) which adjusts the cross section of the passage of the cold air canal (18) by means of a connecting rod (114) .

18. Device according to claim 16, **characterised in that** the control lever (102) commands the displacement of the flap (50) which adjusts the cross section of the passage of the cold air canal (18) by means of toothed segments (112, 114).

19. Device according to any of claims 1 to 18, **characterised in that** the sealing plate (44) and/or the flap (50) which adjusts the cross section of the passage of the cold air canal (18) are equipped with a balancing device.

20. Device according to claim 19, **characterised in that** the balancing device comprises springs (120, 126) or a feeder (134) or scoops (140).

21. Device according to any of claims 1 to 20, **characterised in that** the sealing plate (44) and/or the flap (50) which adjusts the cross section of the passage of the cold air canal (18) comprise air deflector means such as strips (66, 152) or ribs (150) to direct the hot air flow and/or the cold air flow towards chosen zones of a heating and/or air conditioning device for the interior of an automobile vehicle.

22. Device according to any of claims 1 to 21, **characterised in that** the sealing plate (44) and/or the panel (40) comprise sealing means to seal the hot air canal (14) in the closed position of the sealing plate (44) .

23. Device according to claim 22, **characterised in that** the sealing means comprise flexible lips (141, 146) moulded onto the panel (40) and/or onto the sealing plate (44).

24. Device according to claim 22, **characterised in that** the sealing means comprise a foam seal (62) fitted onto the panel (40) and/or onto the sealing plate (44) and/or onto the flap (50).

25. Device according to any of claims 1 to 24, **characterised in that** the sealing plate (44) and/or the panel (40) comprise means of attenuating the level of noise caused by their operation.

26. Device according to claim 25, **characterised in that** the means of attenuating the level of noise elements (156, 158) for profiling the panel (40) and/or the sealing plate (44).

27. Device according to claim 25, **characterised in that** the means of attenuating the level of noise comprise inserts made of a lightened material (160).

28. Device according to claim 25, **characterised in that** the means of attenuating the level of noise comprise inserts (164) coated with an insulating material.

29. Device according to claim 25, **characterised in that** the means of attenuating the level of noise comprise a grill (162) fitted inside the cut-outs of the sealing plate (44) or in the openings (42) of the panel (40).

30. Heating and/or air conditioning unit, especially for the interior of an automobile vehicle, comprising a housing (4) delimiting a passage inside which circulates an air flow (8), wherein this passage is divided into at least one hot air canal (14) and at least one cold air canal (18), **characterised in that** it comprises a mixing device according to any of claims 1 to 29.

31. Unit according to claim 30, **characterised in that** the mixing device is installed directly inside the housing (4).

32. Unit according to claim 30, **characterised in that** the air flow mixing device forms an independent module (100) installed inside the housing (4).

## Patentansprüche

1. Mischvorrichtung, um einen Hauptluftstrom in wechselnde Mengen aufzuteilen, zwischen mindestens einer Warmluftleitung (14) und mindestens einer Kaltluftleitung (18), die mindestens eine Wand (40) mit mindestens einem Durchbruch (42) aufweist, der in der Warmluftleitung (14) angebracht ist, und einer Abschlussplatte (44), die beweglich ist zwischen einer Öffnungsposition, in der sie den Durchbruch (42) in der Wand (40) nicht abdeckt und einer Verschlussposition, in der sie die Wand (40) verschließt, mindestens eine Drosselklappe (50) des Strömungsquerschnitts der Kaltluftleitung (18), die beweglich ist zwischen einer Öffnungsposition und einer Verschlussposition, einen Steuerungsmechanismus (54, 102,114), um die Bewegung der Abschlussplatte (44) und die Bewegung der Drosselklappe (50) des Strömungsquerschnitts der Kaltluftleitung (18) synchron zwischen ihrer Öffnungsposition und ihrer Verschlussposition zu steuern, der sich dadurch auszeichnet, dass die Abschlussplatte (44) sich in einer kombinierten Bewegung der Verschiebung und der Rotation bewegt, wobei die Abschlussplatte (44) in der Öffnungsposition von der Wand (40) getrennt ist.

2. Vorrichtung gemäß Patentanspruch 1, **dadurch gekennzeichnet, dass** die Wand (40) eine Mehrzahl von Durchbrüchen (42) und die Abschlussplatte (44) eine Mehrzahl von Einsätzen (46) aufweist, wobei die Durchbrüche der Wand (40) und die Einsätze (46) der Abschlussplatte (44) im Verhältnis zueinander so angeordnet sind, dass die Warmluftleitung (14) abgeschlossen ist, wenn die Abschlussplatte (44) in ihrer Verschlussposition ist.

3. Vorrichtung gemäß einem der Patentansprüche 1 bis 2, **dadurch gekennzeichnet, dass** sie mindestens eine Leitschaufel (60) aufweist und dadurch, dass die Abschlussplatte (44) mindestens ein Metallstück (58) aufweist, das in der Leitschaufel (60) gleitet.

4. Vorrichtung gemäß einem der Patentansprüche 1 bis 3, die sich **dadurch** auszeichnet, dass sich der Warmluftleitung (14) Wärmetauscher (16) in einer deutlich senkrechten Position befindet.

5. Vorrichtung gemäß Patentanspruch 4, die sich dadurch auszeichnet, dass sie eine einzige Kaltluftleitung (18) aufweist, die unter der Warmluftleitung (14) liegt.

6. Vorrichtung gemäß Patentanspruch 4, die sich **dadurch** auszeichnet, dass sie eine einzige Kaltluftleitung (18) aufweist, die über der Warmluftleitung (14) liegt.

7. Vorrichtung gemäß Patentanspruch 4, die sich **dadurch** auszeichnet, dass sie eine Kaltluftleitung (18) aufweist, die unter der Warmluftleitung liegt und eine Kaltluftleitung (18), die über der Warmluftleitung (14) liegt.

8. Vorrichtung gemäß Patentanspruch 4, die sich **dadurch** auszeichnet, dass sie eine einzige Kaltluftleitung aufweist, die im Verhältnis zur Warmluftleitung seitlich liegt.

9. Vorrichtung gemäß Patentanspruch 4, die sich **dadurch** auszeichnet, dass sie zwei Kaltluftleitungen aufweist, die zu beiden Seiten der Warmluftleitung (14) seitlich liegen.

10. Vorrichtung gemäß einem der Patentansprüche 1 bis 3, die sich **dadurch** auszeichnet, dass der Warmluftleitung (14) Wärmetauscher (16) in einer deutlich waagerechten Position befindet.

11. Vorrichtung gemäß Patentanspruch 10, die sich **dadurch** auszeichnet, dass sie eine einzige Kaltluftleitung (18) aufweist, die unter der Warmluftleitung liegt.

12. Vorrichtung gemäß Patentanspruch 10, die sich **dadurch** auszeichnet, dass sie eine einzige Kaltluftleitung (18) aufweist, die über der Warmluftleitung (14) liegt.

13. Vorrichtung gemäß Patentanspruch 10, die sich **dadurch** auszeichnet, dass sie eine Kaltluftleitung (18) aufweist, die unter der Warmluftleitung (14) liegt und eine Kaltluftleitung (18), die über der Warmluftleitung (14) liegt.

14. Vorrichtung gemäß Patentanspruch 10, die sich **dadurch** auszeichnet, dass sie eine einzige Kaltluftleitung (18) aufweist, die im Verhältnis zur Warmluftleitung die seitlich liegt.

15. Vorrichtung gemäß Patentanspruch 10, die sich **dadurch** auszeichnet, dass sie zwei Kaltluftleitungen aufweist, die zu beiden Seiten der Warmluftleitung (14) seitlich liegen.

16. Vorrichtung gemäß einem der Patentansprüche 1 bis 15, die sich **dadurch** auszeichnet, dass der Steuerungsmechanismus einen Schalthebel (102) aufweist, der die Bewegung der Abschlussplatte (44) und die Bewegung der Drosselklappe (50) des Strömungsquerschnitts der Kaltluftleitung (18) steuert.

17. Vorrichtung gemäß Patentanspruch 16, die sich **dadurch** auszeichnet, dass der Schalthebel (102) die Bewegung der Abschlussplatte (44) und die Bewegung der Drosselklappe (50) des Strömungsquerschnitts der Kaltluftleitung (18) über eine Kolbenstange (114) steuert.

18. Vorrichtung gemäß Patentanspruch 16, die sich **dadurch** auszeichnet, dass der Schalthebel (102) die Bewegung der Drosselklappe (50) des Strömungsquerschnitts der Kaltluftleitung (18) über Zahnsegmente (112,114) steuert.

19. Vorrichtung gemäß einem der Patentansprüche 1 bis 18, die sich **dadurch** auszeichnet, dass die Abschlussplatte (44) und/oder die Drosselklappe (50) des Strömungsquerschnitts der Kaltluftleitung (18) mit einer Symmetrieeinrichtung ausgestattet sind.

20. Vorrichtung gemäß Patentanspruch 19, die sich **dadurch** auszeichnet, dass die Symmetrieeinrichtung Federn (120, 126) oder ein Gewicht (134) oder Ablenkvorrichtungen (140) aufweist.

21. Vorrichtung gemäß einem der Patentansprüche 1 bis 20, die sich **dadurch** auszeichnet, dass die Abschlussplatte (44) und /oder Drosselklappe (50) des Strömungsquerschnitts der Kaltluftleitung (18) Mittel für die Lenkung der Luft aufweisen, wie Ableiter (66, 152) oder Rippen (150), um den Warmluftstrom oder den Kaltluftstrom zu den gewünschten Bereichen einer Heizanlage und/oder Klimaanlage des Fahrgastraums eines Kraftfahrzeugs zu leiten.

22. Vorrichtung gemäß einem der Patentansprüche 1 bis 21, die sich **dadurch** auszeichnet, dass die Abschlussplatte (44) und/oder die Wand (40) Dichtigkeitsmittel aufweisen, um die Dichtigkeit der Warmluftleitung (14) in der Verschlussposition der Abschlussplatte (44) sicherzustellen.

23. Vorrichtung gemäß Patentanspruch 22, die sich **dadurch** auszeichnet, dass die Dichtigkeitsvorrichtungen weiche Lippen (141, 146) aufweisen, die auf die Wand (40) und/oder auf die Abschlussplatte (44) gegossen sind.

24. Vorrichtung gemäß Patentanspruch 22, die sich **dadurch** auszeichnet, dass die Dichtigkeitsmittel eine Verbindungsstelle aus Schaumstoff (62) aufweisen, die auf der Wand (40) und /oder auf der Abschlussplatte (44) und/oder auf der Drosselklappe (50) vorgesehen ist.

25. Vorrichtung gemäß einem der Patentansprüche 1 bis 24, die sich **dadurch** auszeichnet, dass die Abschlussplatte (44) und/oder die Wand (40) Mittel aufweisen, um den durch ihre Wirkungsweise verursachten Geräuschpegel zu dämpfen.

26. Vorrichtung gemäß Patentanspruch 25, die sich **dadurch** auszeichnet, dass die Mittel zur Dämmung des Geräuschpegels Elemente (156, 158) für die Formung der Wand (40) und/oder der Abschlussplatte (44) aufweisen.

27. Vorrichtung gemäß Patentanspruch 25, die sich **dadurch** auszeichnet, dass die Mittel zur Dämmung des Geräuschpegels Einsätze aus Leichtstoff (160) aufweisen.

28. Vorrichtung gemäß Patentanspruch 25, die sich **dadurch** auszeichnet, dass die Mittel zur Dämmung des Geräuschpegels Einsätze (164) aufweisen, die mit einem Dämmstoff überzogen sind.

29. Vorrichtung gemäß Patentanspruch 25, die sich **dadurch** auszeichnet, dass die Vorrichtungen zur Dämmung des Geräuschpegels ein Gitter (162) aufweisen, das in den Einsätzen der Abschlussplatte (44) oder in den Durchbrüchen (42) der Wand (40) vorgesehen ist.

30. Heizanlage und/oder Klimaanlage, insbesondere des Fahrgastraums eines Kraftfahrzeugs, die ein Gehäuse (4) aufweist, das einen Durchlass abgrenzt, in dem eine Luftstrom (8) zirkuliert und dieser Durchlass sich mindestens in eine Warmluftleitung (14) und in mindestens eine Kaltluftleitung (18) aufteilt und sich **dadurch** auszeichnet, dass er eine Mischvorrichtung gemäß einem der Patentansprüche 1 bis 29 aufweist.

31. Anlage gemäß Patentanspruch 30, die sich **dadurch** auszeichnet, dass die Mischvorrichtung direkt in das Gehäuse (4) eingebaut ist.

32. Anlage gemäß Patentanspruch 30, die sich **dadurch** auszeichnet, dass die Mischvorrichtung des Luftstroms ein unabhängiges Modul (100) darstellt, das in das Gehäuse (4) übertragen wird.
